# EUROPEAN PATENT SPECIFICATION

(11) **EP 2 182 640 B1**
(45) Date of publication and mention of the grant of the patent: **31.08.2011**
(21) Application number: 08291033.2
(22) Date of filing: 04.11.2008
(51) Int. Cl.: H04B 1/00

(54) **Method for multi-standard baseband processing, baseband board, base station and radio network**
Verfahren für Multistandard-Basisbandverarbeitung, Basisbandplatine, Basisstation und Funknetzwerk
Procédé pour le traitement de bande de base multi-standard, carte de bande de base, station de base et réseau radio

(43) Date of publication of application: 05.05.2010
(73) Proprietor: Alcatel Lucent, 75008 Paris (FR)
(72) Inventor: Loewel, Thomas, 12247 Berlin (DE); Nolte, Klaus, Dr., 13505 Berlin (DE)
(74) Representative: Schmidt, Werner Karl

(56) References cited:
- EP-A- 1 176 709
- WO-A-2005/088849

## Description

The invention relates to a method for multi-standard baseband processing, a baseband board, a base station and a radio network.

### Background of the Invention

Different technologies of radio standards like e.g. UMTS, WiMAX, RAN-LTE with different specifications working in different frequency ranges have specific advantages and disadvantages. For the best possible utilization the radio standard with the most advantages regarding the environment and the requirements should be selected. A leading concept in this context is the multi-standard-base-station. A part of a base-station is the baseband processing, on which signal processing (coding, modulation, error correction) is carried out. The signal processing, in particular decision which kind of coding, modulation or error correction should be chosen, depends on the desired radio standard. In case of a multi-standard-base-station the baseband processing must be flexible enough to switch between different radio standards. Yet, the known multi-standard baseband processing methods take a long time for switching the signal to the desired radio standard (to the desired baseband processing). Further the options provided by the known multi-standard-base-stations are very limited since switching is only possible e.g. from UMTS to UMTS HSDPA.

EP 1 176 709 A discloses a radio communication apparatus with a base band processor. The base band processor comprises two separate base band processors adapted to operate in accordance with different modulation formats and switches under the control of a format control signal, the switch coupling a front end section to a media access control section of the apparatus.

WO 2005/088849 discloses a multi-mode wireless device having a transceiver including a multi-mode transmitter and a multi-mode receiver. The transmitter can include a multi-mode transmit baseband portion configured to support all of the transmit modes. Similarly, the receiver can include a multi-mode baseband portion that is configured to support all of the receive modes. The transmitter can also include a frequency conversion stage that can convert the modes.

### Object of the Invention

It is therefore an object of the invention to provide a method for fast and flexible multi-standard-baseband-processing. It is a further an object to suggest a fast and flexible design of a baseband board, a base station and a radio network.

### Summary of the Invention

According to a first aspect, this object is met by a method for multi-standard baseband processing according to claim 1.

According to the inventive method a control field is inserted into a radio signal to be processed, whereby the radio signal comprises radio standard dependent data. The control field comprises address input information, which determines to which processing element the respective radio signal is to be switched to. Processing elements of different radio standards are grouped into m groups. The radio signal is fed to at least one of these groups of processing elements, whereby in each group the radio signal is demultiplexed, the demultiplexed radio signal is switched to one of the radio standard dependent processing elements of said respective group, whereby the addressinput of the control field determines which radio signal is switched to which processing element of the respective group. After having passed the respective radio standard dependent processing element the radio signal is switched from said processing elements by means of a multiplexer. The position of the control field inside the signal denotes the desired radio standard and/or service switch. Therewith the baseband processing can be adapted to a selected radio standard automatically.

The inventive method facilitates a fast switching from one radio standard or service to another radio standard or service and therefore provides high flexibility (e.g. switching from UMTS to WiMAX).

In a preferred embodiment, the grouping of elementary processing elements is functional. One group may for example comprise elementary processing elements; another group may comprise coding processing elements, a third one mapping processing elements etc.

Alternatively the grouping of elementary processing elements may be chain based. That means that the grouping of the elements is not functional but in order of the respective radio standards. The advantage compared to the functional grouping is the less complexity but the disadvantage is the limited flexibility.

In case that no processing element of a group is needed it is advantageous when the radio signal bypasses the respective group of elementary processing elements. Then no unnecessary processing has to be carried out.

Preferably the processing elements within the several groups have a constant delay. Thus a radio standard or service independent delay will be obtained.

In a highly preferred embodiment of the inventive method a configuration field is inserted into the radio signal, the configuration field comprising additional parameters for configuration and/or reconfiguration of the processing elements. The functionality of the processing elements can then be determined on behalf of the reconfiguration parameters. Thus the flexibility of the baseband processing can be increased and the baseband processing can support future standards.

Preferably the configuration field is positioned within the radio signal after the control field. The control field comprises e.g. information about the radio standard to be used with the following data and determines which additional information (configuration parameters) are required for processing the following data.

A further aspect of the invention relates to a baseband board for processing a radio signal, said baseband board comprising m groups of radio standard dependent processing elements, each group comprising elementary processing elements which are carried out alternatively, a demultiplexer for feeding the radio signal to at least one of the groups of elementary processing elements and a multiplexer for switching the radio signal from the radio standard dependent processing elements. The baseband board is adapted to switch the demultiplexed radio signal to a determined radio standard dependent processing element of a respective group based on addressinput information (sel) of a control field inserted into the radio signal which comprises radio standard dependent data.

A third aspect of the invention relates to a base station for use in a multi-standard communication network, said base station comprising a baseband board as described above. Besides the inventive baseband board for layer 1 processing the base station further comprises a device for operation and maintenance, a radio transmitter and a receiver.

By incorporating the inventive flexible baseband board into a base station it is possible to easily add future radio standards and to adapt actual radio standards to different requirements. E.g. it is possible to operate the inventive base station in a parallel mode thereby providing processing of different radio standards simultaneously. To do so the base station assigns its resources to the different standards dynamically.

A fourth aspect of the invention relates to a radio network for multi-standard baseband processing comprising a base station as described above.

With the present invention highly flexible radio transmission and receiving systems can be realized.

Further features and advantages are stated in the following description of exemplary embodiments, with reference to the figures of the drawing, which shows significant details, and are defined by the claims. The Individual features can be implemented individually by themselves, or several of them can be implemented in any desired combination.

### Brief Description of the Drawings

Exemplary embodiments are shown in the diagrammatic drawing and are explained in the description below. The following are shown:
- **Fig.** 1: shows a signal sequence comprising different radio signals which are extended with additional control fields;
- **Fig. 2**: shows a signal sequence comprising different radio signals which are extended with additional control fields and reconfiguration parameter fields;
- **Fig. 3**: shows a design of an inventive baseband processing method without (re)configuration option; and
- **Fig.4**: shows a design of an inventive baseband processing method with (re)configuration option.

### Detailed Description of Preferred Embodiments

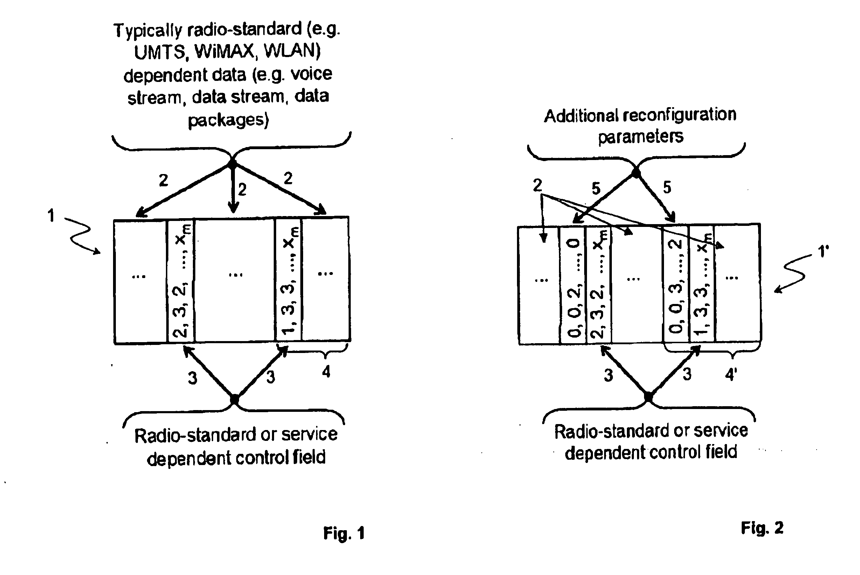

**Figure 1** shows an extended signal sequence 1 comprising different radio signals 2. For a fast and flexible setup according to the invention control field 3 is inserted into a radio signal 2, as shown in figure 1. The signal sequence 1 comprises radio standard dependent data which may comprise for example voice streams, data streams or data packages. Each radio signal is preceded by a set of control field data x₁...xₘ, thereby forming an extended signal 4. Each set of control field data x₁...xₘ, forms a control field 3. The position of the control field 3 inside the signal sequence 1 indicates the radio signal 2 to which the respective control field 3 refers to. The control field data x₁...xₘ, denotes the desired radio standard and/or service switch which is to be used for the respective radio signal 2.

**Figure 2** shows a signal sequence 1' with enhanced extended a radio signals 4'. In addition to the control fields 3 (re)configuration fields 5 are inserted into the radio signal 2, each (re)configuration field 5 comprising (re)configuration parameters for the respective radio signal 2. The position of these (re)configuration fields 5 is assumed, but not limited to, after the control fields 3. This allows performing of (partial) (re)configuration as will be described below.

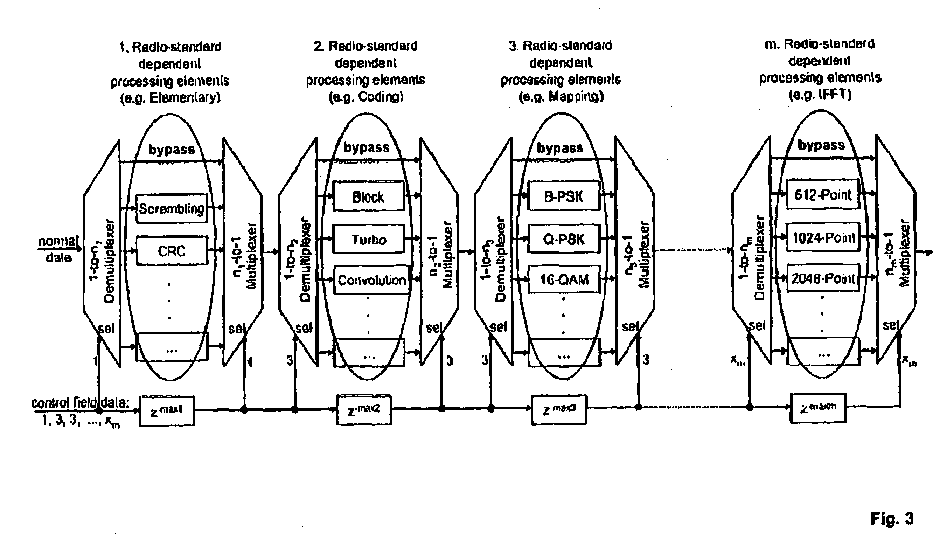

**Figure 3** shows the design of an inventive baseband processing method for an extended radio signal shown in figure 1. Processing elements of different radio standards are grouped. This grouping is carried out such that processes which are performed alternatively (depending on the radio standard) are grouped together in one group. Figure 3 shows functional based groups ("elementary processes", "coding", "mapping" and "IFFT"), i.e. the processing elements within a group are concurrently oriented. Another way is to group the processing elements chain based. On the chain based grouping the first processing elements of each considerred radio standard form the first group, the second elements the second group and so on.

Fig. 3 shows "normal data" and "control field data" of the radio signal which have been obtained by splitting the extended signal shown in fig. 1, e.g. by time multiplexing. For each group a demultiplexer is provided in order to switch the radio signal to the desired radio standard dependent operations (processing elements) within a given group (e.g. to scrambling or CRC of group 1). After carrying out the desired operation the radio signal is switched from the respective processing element by means of a multiplexer, the multiplexer multiplexing the radio signal and feeding the multiplexed radio signal to the demultiplexer of the following group which again switches the radio signal to the desired radio standard dependent processing elements of the next group (e.g. to block-, turbo- or convolution coding of group 2), and so on. The realisation of one radio standard at a particular time can be achieved by the correct switching of all demultiplexers and multiplexers. The switching of the demultiplexers and multiplexers results from the value on an addressinput sel which feeds the control field data x₁...xₘ of the extended radio signal to the demultiplexer. The corresponding addresses of all demultiplexers and multiplexers are the values within the control field (control field data x₁...xₘ). I.e. the inserted control field within the radio signal switches all demultiplexers and multiplexers regarding the desired radio standard or service. The radio signal followed by this control field will be processed according to this standard or service. A bypass is foreseen for the case that no processing element within a group will be needed. The activation of this bypass will be achieved with a special value on the addressinput (sel) of all relevant (de)multiplexers.

The elements within the several groups preferably have a constant delay. Thus a radio standard or service independent delay will be obtained. The delay within a group is equal to the maximum delay within the group. If the delay of a processing element is smaller than the maximum delay - it must be extended. That applies to the bypass too. As a consequence the data of the control filed must be delayed with the maximum delay of each group too.

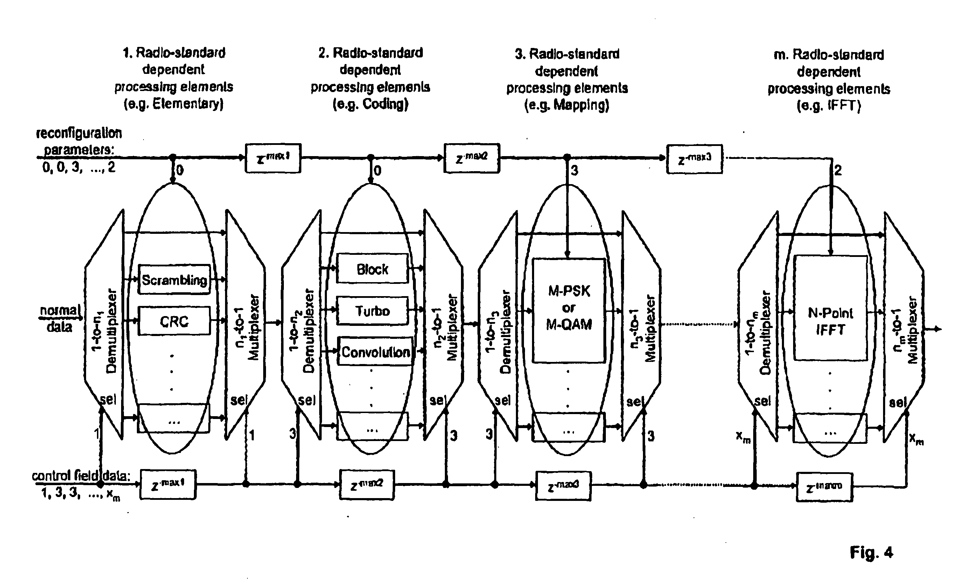

**Figure 4** shows an enhanced variant of the inventive method comprising additional configuration and/or reconfiguration possibilities. In this case, in addition to the above described control fields, fields with configuration and/or reconfiguration parameters are inserted into the signal sequence, as shown in figure 2, In contrary to the design without configuration and/or reconfiguration option as shown in figure 3 some processing elements used with the variant shown in figure 4 within the formed groups or whole groups are (re)configurable. That means the proper functionality of the processing elements is initially undefined or defaults. On behalf of the configuration and/or reconfiguration parameters the functionality will be determined. Partial configuration and/or reconfiguration are possible. These configuration and/or reconfiguration parameters will be delivered after the control field in the radio signal as shown in figure 2.

The present invention allows fast and flexible multi-standard-baseband-processing by extending a typical radio standard signal by a control field controlling the baseband processing dependent on the chosen radio standard. Further partially or complete configuration and/or reconfiguration of elements are possible in order to adopt future services or radio standards. The inventive method therewith facilitates cognitive radio applications in a base-station

The above description of the preferred embodiments has been given by way of example. From the disclosure given, those skilled in the art will not only understand the present invention and its attendant advantages, but will also find apparent various changes and modifications to the structures and methods disclosed. The applicant seeks, therefore, to cover all such changes and modifications as defined by the appended claims .

## Claims

1. A method for multi-standard baseband processing, wherein a control field (3) comprising address_input information (sel) is inserted into a radio signal (2) to be processed, the radio signal (2) comprising radio standard dependent data and
wherein the baseband processing is adapted to a selected radio standard, whereby
- elementary processing elements of different radio standards are grouped into m groups,
- the radio signal (2) is fed to at least one of the groups of elementary processing elements, whereby in each group the radio signal (2) is demultiplexed,
- the demultiplexed radio signal is switched to a determined radio standard dependent processing element of said respective group, whereby the address input (sel) of the control field (3) determines which signal (2) is switched to which processing element of the respective group,
- the radio signal (2) is switched from the radio standard dependent processing element of said respective group by means of a multiplexer.

2. A method according to claim 1, **characterized in that** the grouping of elementary processing elements is functional.

3. A method according to claim 1, **characterized in that** the grouping of elementary processing elements is chain based.

4. A method according to claim 1, **characterized in that** the radio signal (2) bypasses a group of elementary processing elements for the case that no processing element of a group is needed.

5. A method according to claim 1, **characterized in that** the processing elements within the several groups have a constant delay.

6. A method according to claim 1, **characterized in that** a configuration field (5) is inserted into the radio signal (2), the configuration field (5) comprising additional parameters for configuration and/or reconfiguration of the processing elements

7. A method according to claim 6, **characterized in that** the configuration field (5) is positioned within the radio signal (2) after the control field (3).

8. A baseband board for processing a radio signal (2), said baseband board comprising:
m groups of radio standard dependent processing elements, each group comprising elementary processing elements which are carried out alternatively,
a demultiplexer for feeding a radio signal (2) to at least one of the groups of elementary processing elements, and a multiplexer for switching the radio signal (2) from the radio standard dependent processing elements,
wherein
the baseband board is adapted to switch the demultiplexed radio signal to a determined radio standard dependent processing element of a respective group based on address input information (sel) of a control field (3) inserted into the radio signal (2) which comprises radio standard dependent data.

9. A base station for use in a multi-standard communication network, **characterized in that** said base station comprises a baseband board according to claim 8.

10. Radio network for multi-standard baseband processing comprising a base station according to claim 9.

## Patentansprüche

1. Verfahren für Multistandard-Basisbandverarbeitung, wobei ein Steuerfeld (3) mit Adresseintragsinformationen (sel) in ein zu verarbeitendes Funksignal (2) eingefügt wird, wobei das Funksignal (2) funkstandardabhängige Daten enthält, und
wobei die Basisbandverarbeitung für einen ausgewählten Funkstandard geeignet ist, wobei
- elementare Verarbeitungselemente mit verschiedenen Funkstandards in m Gruppen gruppiert werden,
- das Funksignal (2) in mindestens eine Gruppe von elementaren Verarbeitungsmitteln eingespeist wird, wobei das Funksignal (2) in jeder Gruppe gedemultiplext wird,
- das gedemultiplexte Funksignal auf ein bestimmtes funkstandardabhängiges Verarbeitungselement der besagten jeweiligen Gruppe geschaltet wird, wobei der Adresseintrag (sel) des Steuerfelds (3) bestimmt, welches Signal (2) auf welches Verarbeitungselement der jeweiligen Gruppe geschaltet wird,
- das Funksignal (2) von dem funkstandardabhängigen Verarbeitungselement der besagten jeweiligen Gruppe anhand eines Multiplexers geschaltet wird.

2. Verfahren nach Anspruch 1, **dadurch gekennzeichnet, dass** das Gruppieren von elementaren Verarbeitungselementen funktionell ist.

3. Verfahren nach Anspruch 1, **dadurch gekennzeichnet, dass** das Gruppieren von elementaren Verarbeitungselementen kettenbasiert ist.

4. Verfahren nach Anspruch 1, **dadurch gekennzeichnet, dass** das Funksignal (2) eine Gruppe von elementaren Verarbeitungselementen überbrückt, wenn kein Verarbeitungselement einer Gruppe benötigt wird.

5. Verfahren nach Anspruch 1, **dadurch gekennzeichnet, dass** die Verarbeitungselemente innerhalb der mehreren Gruppen eine konstante Verzögerungszeit aufweisen.

6. Verfahren nach Anspruch 1, **dadurch gekennzeichnet, dass** ein Konfigurationsfeld (5) in das Funksignal (2) eingefügt wird, wobei das Konfigurationsfeld (5) zusätzliche Parameter für die Konfiguration und/oder Rekonfiguration der Verarbeitungselemente enthält.

7. Verfahren nach Anspruch 6, **dadurch gekennzeichnet, dass** das Konfigurationsfeld (5) innerhalb des Funksignals (2) hinter dem Steuerfeld (3) angeordnet ist.

8. Basisbandplatine für die Verarbeitung eines Funksignals (2), wobei die besagte Basisbandplatine umfasst:
m Gruppen von funkstandardabhängigen Verarbeitungselementen, wobei jede Gruppe elementare Verarbeitungselemente umfasst, welche alternativ ausgeführt werden,
einen Demultiplexer zum Einspeisen eines Funksignals (2) in mindestens eine der Gruppen von elementaren Verarbeitungselementen, und einen Multiplexer zum Schalten des Funksignals (2) von den funkstandardabhängigen Verarbeitungselementen,
wobei
die Basisbandplatine dazu ausgelegt ist, das gedemultiplexte Funksignal auf der Basis von Adresseintragsinformationen (sel) eines in das Funksignal (2) eingefügten Steuerfelds (3), welches funkstandardabhängige Daten enthält, auf ein bestimmtes funkstandardabhängiges Verarbeitungselement einer jeweiligen Gruppe zu schalten.

9. Basisstation für die Verwendung in einem Multistandard-Kommunikationsnetzwerk, **dadurch gekennzeichnet, dass** die besagte Basisstation eine Basisbandplatine gemäß Anspruch 8 umfasst.

10. Funknetzwerk für Multistandard-Basisbandverarbeitung, umfassend eine Basisstation gemäß Anspruch 9.

## Revendications

1. Procédé pour le traitement de bande de base multi-standard, dans lequel un champ de commande (3) comprenant des informations d'entrée d'adresse (sel) est inséré dans un signal radio (2) à traiter, le signal radio (2) comprenant des données dépendant des normes radio et
dans lequel le traitement de bande de base est adapté à une norme radio sélectionnée, au moyen duquel
- des éléments de traitement élémentaire de normes radio différentes sont regroupés en m groupes,
- le signal radio (2) est délivré au moins à un des groupes d'éléments de traitement élémentaire, le signal radio (2) étant démultiplexé dans chaque groupe,
- le signal radio démultiplexé est commuté sur un élément de traitement déterminé dépendant des normes radio dudit groupe respectif, l'entrée d'adresse (sel) du champ de commande (3) déterminant quel signal (2) est commuté sur quel élément de traitement du groupe respectif,
- le signal radio (2) est commuté à partir de l'élément de traitement dépendant des normes radio dudit groupe respectif au moyen d'un multiplexeur.

2. Procédé selon la revendication 1, **caractérisé en ce que** le regroupement d'éléments de traitement élémentaire fonctionne.

3. Procédé selon la revendication 1, **caractérisé en ce que** le regroupement d'éléments de traitement élémentaire est basé sur une chaîne.

4. Procédé selon la revendication 1, **caractérisé en ce que** le signal radio (2) évite un groupe d'éléments de traitement élémentaire pour le cas où aucun élément de traitement d'un groupe n'est nécessaire.

5. Procédé selon la revendication 1, **caractérisé en ce que** les éléments de traitement dans les groupes multiples ont un retard constant.

6. Procédé selon la revendication 1, **caractérisé en ce qu'**un champ de configuration (5) est inséré dans le signal radio (2), le champ de configuration (5) comprenant des paramètres supplémentaires pour la configuration et/ou la reconfiguration des éléments de traitement.

7. Procédé selon la revendication 6, **caractérisé en ce que** le champ de configuration (5) est positionné dans le signal radio (2) après le champ de commande (3).

8. Carte de bande de base pour traiter un signal radio (2), ladite carte de bande de base comprenant :
m groupes d'éléments de traitement dépendant des normes radio, chaque groupe comprenant des éléments de traitement élémentaire qui sont exécutés alternativement,
un démultiplexeur pour délivrer un signal radio (2) à au moins un des groupes d'éléments de traitement élémentaire, et un démultiplexeur pour commuter le signal radio (2) à partir des éléments de traitement dépendant des normes radio,
dans laquelle
la carte de bande de base est adaptée pour commuter le signal radio démultiplexé sur un élément de traitement déterminé dépendant des normes radio d'un groupe respectif sur la base d'informations d'entrée d'adresse (sel) d'un champ de commande (3) inséré dans le signal radio (2) qui comprend des données dépendant des normes radio.

9. Station de base à utiliser dans un réseau de communication multi-standard, **caractérisée en ce que** ladite station de base comprend une carte de bande de base selon la revendication 8.

10. Réseau radio pour le traitement de bande de base multi-standard comprenant une station de base selon la revendication 9.
